# EUROPEAN PATENT APPLICATION

(11) **EP 2 348 441 A2**
(43) Date of publication of application: **27.07.2011**
(21) Application number: 11150488.2
(22) Date of filing: 10.01.2011
(51) Int. Cl.: G06F 21/00

(54) **Image forming apparatus, setting method of image forming apparatus and security setting apparatus**

(30) Priority: 12.01.2010 US 294141 P
(71) Applicant: Kabushiki Kaisha Toshiba, Minato-ku, Tokyo 105-8001 (JP); Toshiba TEC Kabushiki Kaisha, Tokyo 141-8664 (JP)
(72) Inventor: Takahashi Kazunobu, Tokyo 141-8664 (JP)
(74) Representative: Gendron, Vincent Christian

(57) **Abstract**

According to one embodiment, an image forming apparatus includes a database (32), an acquisition unit (ACT11), a list creation unit (ACT13) and a list output unit (ACT19). The database stores assets to be protected, threats to the protected assets and security protection methods to the threats. The acquisition unit acquires basic information inputted by an administrator. The list creation unit lists a threat to a protected asset estimated from the basic information acquired by the acquisition unit and a security protection method by referring to the database. The list output unit outputs information listed by the list creation unit.

## Description

### FIELD

Embodiments described herein relate generally to an image forming apparatus, a setting method of the image forming apparatus and a security settings apparatus.

### BACKGROUND

Hitherto, in an image forming apparatus such as a digital multi-function peripheral, machine setting can be changed by an operation of an administrator. In the digital multi-function peripheral, a function relating to security is set in accordance with the instruction of the administrator. However, setting relating to the security of the digital multi-function peripheral is varied according to the individual disposed environment. Thus, in the digital multi-function peripheral, it is difficult to provide preset security settings. In the related art digital multi-function peripheral, since security settings are individually customized, the administrator is required to instruct the settings individually with respect to various setting items.

### BRIEF DESCRIPTION OF THE DRAWINGS

FIG. 1 is a view schematically showing a structural example of an image forming system.
FIG. 2 is a block diagram showing a structural example of a control system of a digital multi-function peripheral.
FIG. 3 is a flowchart showing a flow of a registration process of security settings.
FIG. 4 shows an example of a report (list).
FIG. 5 shows a display example of a selection screen of a protection method relating to security.
FIG. 6 shows a display example of a carte (diagnosis result) relating to security settings.
FIG. 7 is a flowchart for explaining a flow of an input process of basic information.
FIG. 8 is a flowchart for explaining a report creation process.
FIG. 9 shows an example of a database showing a correspondence relation between basic functions of an MFP and protected assets.
FIG. 10 shows an example of a database showing a correspondence relation between protected assets, threats and protections.
FIG. 11 shows an example of a database showing a relation of security intensity and respective protections.
FIG. 12 shows an example of a database of standard setting for usages.
FIG. 13 is a flowchart for explaining a flow of a process accompanying the change of settings relating to security.
FIG. 14 is a flowchart for explaining a process if a security setting knowledge database is updated.

### DETAILED DESCRIPTION

In general, according to one embodiment, an image forming apparatus includes a database, an acquisition unit, a list creation unit and a list output unit. The database stores assets to be protected, threats to the protected assets and security protection methods to the threats. The acquisition unit acquires basic information inputted by an administrator. The list creation unit lists a threat to a protected asset estimated from the basic information acquired by the acquisition unit and a security protection method by referring to the database. The list output unit outputs information listed by the list creation unit.

Hereinafter, embodiments will be described in detail with reference to the drawings.

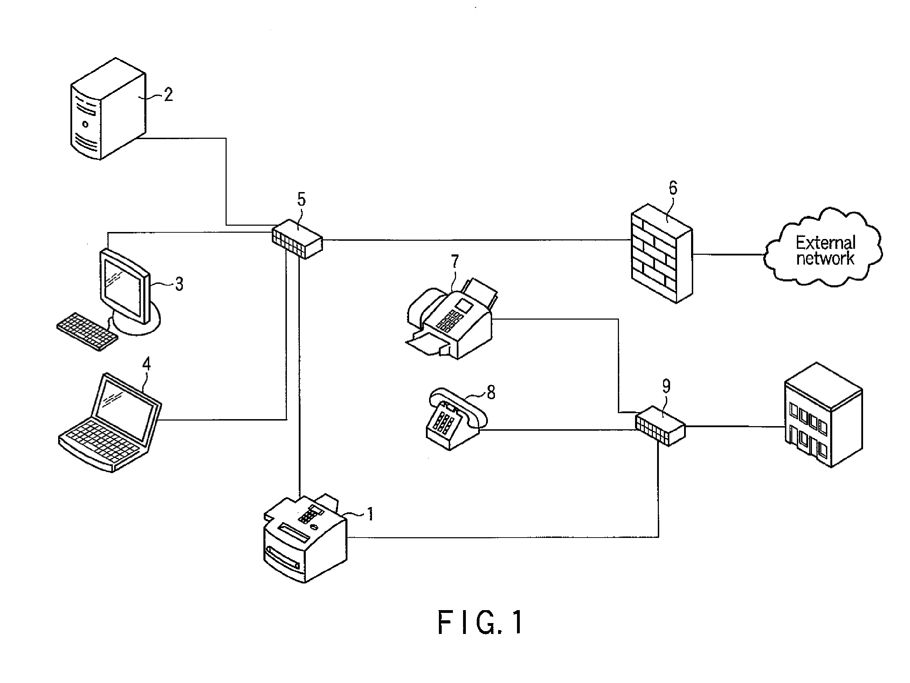

FIG. 1 is a view schematically showing a structural example of an image forming system.

As shown in FIG. 1, a digital multi-function peripheral (MFP) 1 as an image forming apparatus has a function to connect with a local area network. In the structural example shown in FIG. 1, the digital multi-function peripheral 1 is connected to a server 2, a user terminal 3 and an administrator terminal 4 in the local area network through a router 5. The digital multi-function peripheral 1 is connected to an external network through a firewall connected to the router 5. Besides, the digital multi-function peripheral 1 has a function to connect with a telephone line. In the structural example shown in FIG. 1, the digital multifunction peripheral 1 is connected to a PBX 9 for connecting a FAX 7 and a telephone 8. The digital multi-function peripheral 1 is connected to a telephone exchange office through the PBX 9.

The digital multi-function peripheral (MFP) 1 functions as an image forming apparatus (printing apparatus). The digital multi-function peripheral 1 has a scanner function, a printer function, a copy function, a network communication function, a facsimile communication function and the like. The digital multi-function peripheral 1 can be connected to networks of various structures. The digital multi-function peripheral 1 can be subjected to various settings according to the usage of a user. The digital multi-function peripheral 1 restricts a specific function or selects a data processing system in accordance with the setting content. For example, an administrator specifies settings relating to security, such as encryption intensity for each device, setting of secure erase or network port blocking.

The server 2 is a server computer including a processor, a memory, an interface and the like. The server 2 performs data communication with respective equipments in the local area network through the router 5. In the server 2, the processor executes programs stored in the memory so that various processing functions are realized.

The user terminal 3 is a terminal apparatus used by a user. The user terminal 3 includes a processor, a memory, an interface, an operation unit, a display and the like. The user terminal 3 performs data communication with the respective equipments in the local area network connected through the router 5. In the user terminal 3, the processor executes programs stored in the memory so that various processing functions are realized. The user terminal 3 is, for example, a personal computer. Besides, the user terminal 3 may be a portable terminal apparatus capable of communicating with the digital multi-function peripheral 1.

The administrator terminal 4 is a terminal apparatus used by the administrator. The administrator terminal 4 includes a processor, a memory, an interface, an operation unit, a display and the like. The administrator terminal 4 performs data communication with the respective equipments in the local area network through the router 5. In the administrator terminal 4, the processor executes programs stored in the memory so that various functions are realized. The administrator terminal 4 may be any equipment capable of communicating with the digital multi-function peripheral 1. The administrator terminal 4 is constituted by, for example, a personal computer. The administrator terminal 4 may be a portable terminal apparatus capable of communicating with the digital multi-function peripheral 1.

Next, a structure of the digital multi-function peripheral 1 will be described.

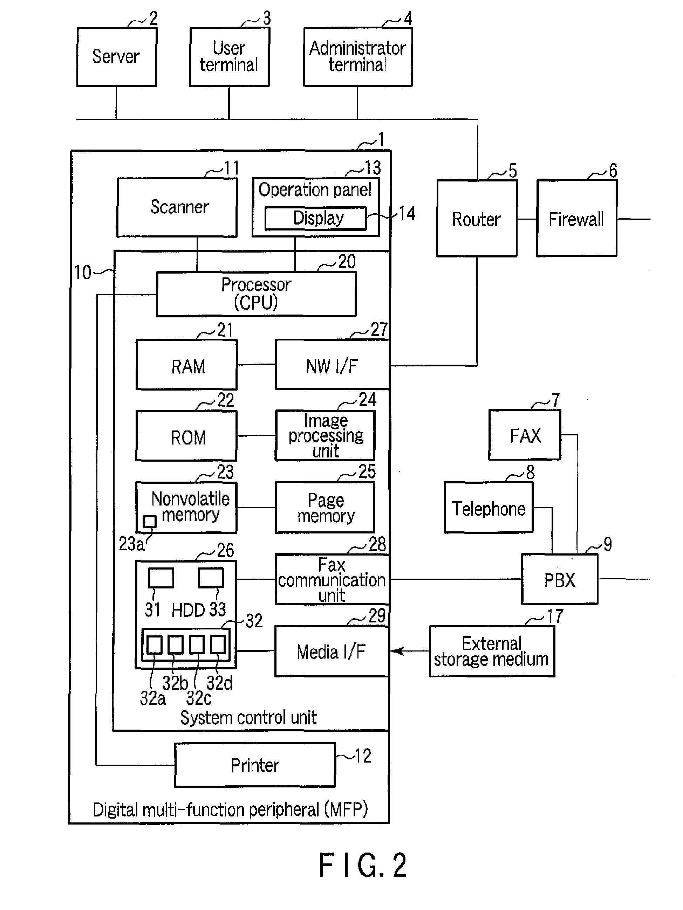

FIG. 2 is a block diagram showing a structural example of a control system of the digital multi-function peripheral 1.

As shown in FIG. 2, the digital multi-function peripheral 1 includes a system control unit 10, a scanner 11, a printer 12, an operation panel 13 and a display 14. The system control unit 10 collectively controls the respective units in the digital multi-function peripheral 1. The system control unit 10 is connected to the scanner 11, the printer 12, the operation panel 13 and the display 14. For example, the system control unit 10 controls the scanner 11 or the printer 12 in accordance with the operation instruction inputted to the operation panel 13 or the user terminal 3. Besides, the system control unit 10 acquires setting information inputted by the operation panel 13 or the administrator terminal 4.

The scanner 11 is an image acquisition unit to convert an image on a document surface into image data. For example, the scanner 11 optically scans the document surface to read the image on the document surface as color image data or monochrome image data. The scanner 11 includes a scanning mechanism, a photoelectric conversion unit, an auto document feeder (ADF) and the like. The printer 12 is an image forming unit to form an image on a recording medium. For example, the printer 12 forms a color image or a monochrome image on a sheet. The printer 12 forms the image by a printing system such as an electrophotographic system, an inkjet system or a thermal transfer system.

The operation panel 13 is a user interface. The operation panel 13 includes, for example, various operation keys, a display 14 having a built-in touch panel and the like. The operation panel 13 functions as an operation unit by which the user inputs operation instructions, and as a display to display a guide or the like to the user. For example, the operation panel 13 is used not only for instructing the execution of a process but also for inputting information relating to the setting to the digital multi-function peripheral by the administrator.

The system control unit 10 includes a processor (CPU) 20, a random access memory (RAM) 21, a read only memory (ROM) 22, a nonvolatile memory 23, an image processing unit 24, a page memory 25, a hard disk drive (HDD) 26, a network interface (NW I/F) 27, a FAX communication unit 28, a media interface (I/F) 29 and the like.

Incidentally, the system control unit 10 functions as a security setting device to perform settings, such as security settings, for the digital multi-function peripheral 1. However, the security setting device to perform the security settings for the digital multi-function peripheral 1 may be realized by the server 2 connected to the digital multi-function peripheral 1 through the network. In this case, the process relating to the security settings has only to be executed by the server 2.

The processor 20 is, for example, a CPU. The processor 20 executes control programs stored in the ROM 22, the nonvolatile memory 23 or the HDD 26 so that various processing functions are realized. The RAM 21 is a main memory functioning as a working memory. The ROM 22 stores a control program to control the operation of the digital multi-function peripheral 1, control data and the like. The nonvolatile memory 23 is a rewritable nonvolatile memory. The nonvolatile memory 23 stores the control programs to realize various processing functions, the control data and the like.

The nonvolatile memory 23 includes a storage area 23a to store information (machine setting information) indicating the present machine setting of the digital multi-function peripheral 1. The machine setting is the setting relating to the basic operation of the digital multi-function peripheral 1. The machine setting is different from the setting (process setting) for individual job (copy, scan, print or the like) to be executed. The machine setting is the setting relating to the function executed by the digital multi-function peripheral 1, such as, for example, security setting or operation restriction. Incidentally, the machine setting information may be stored in the HDD 26.

The image processing unit 24 processes image data read by the scanner 11 or image data received through the network. The page memory 25 is a memory including a storage area in which image data of at least one page is expanded. The HDD 26 is a large-capacity memory for data storage. The HDD 26 stores, for example, image data as a print object.

The network interface (NW I/F) 27 is an interface for performing data communication with respective apparatuses in the local area network. The FAX communication unit 28 is an interface for performing facsimile communication using a telephone line through the PBX 9. The media interface (I/F) 29 is an interface for directly (locally) connecting an external storage device such as a memory device or a memory card.

Besides, the HDD 26 includes various databases. For example, the HDD 26 includes a user information database (DB) 31, a security setting knowledge database (DB) 32, and a term database 33. The user information database 31 stores user information including the basic information of the digital multi-function peripheral 1. The basic information of the digital multi-function peripheral 1 is the information indicating a usage, security intensity, basic functions to be used, disposed environment and the like. The security setting knowledge database 32 stores information relating to security settings. The term database 33 stores the meaning (explanation) of a technical term or the like displayed on the setting screen or guide screen. Incidentally, the information stored in these databases may be stored in the nonvolatile memory 23.

Next, the security settings for the digital multi-function peripheral 1 will be described.

In this embodiment, the digital multi-function peripheral 1 operates in accordance with the security settings. The security settings are information to be set in accordance with information such as the usage of the digital multi-function peripheral 1, required security intensity, MFP disposed environment, and functions to be used. However, the security settings applied to the digital multi-function peripheral 1 are not uniquely determined by the foregoing information. The security settings applied to the digital multi-function peripheral 1 are determined (specified) by the administrator having management authority over the digital multi-function peripheral.

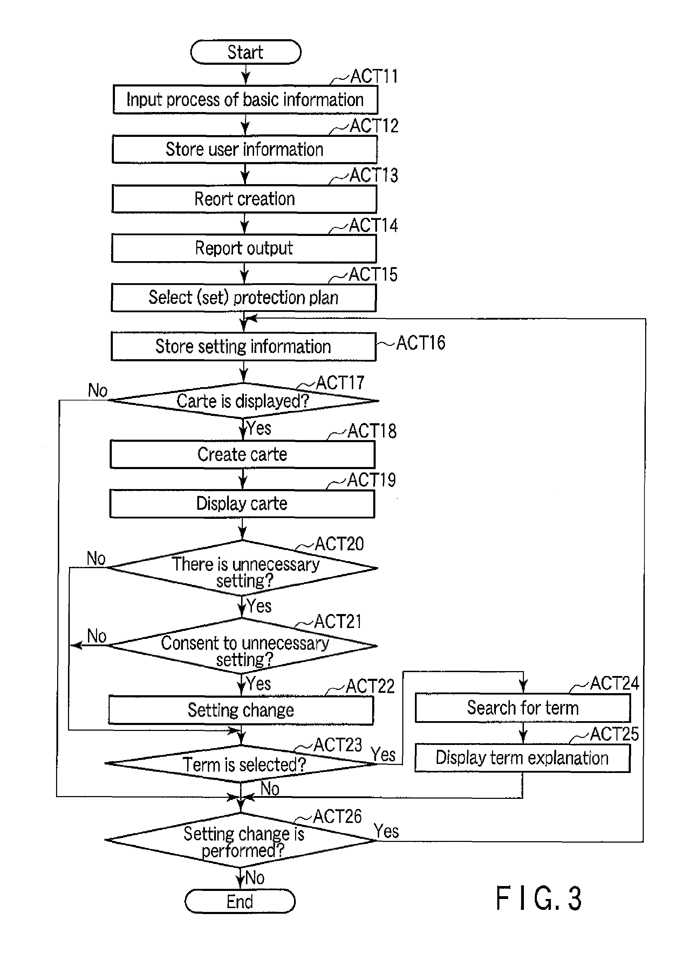

FIG. 3 is a flowchart showing a flow of a process of registering the security settings for the digital multi-function peripheral 1.

First, if the digital multi-function peripheral 1 is newly set (for example, if the digital multi-function peripheral 1 is newly installed or moved, if the usage is again set, the security policy is again set, if the setting environment is again set, or if the function to be used is again set), the administrator inputs the basic information for the digital multi-function peripheral 1 by the operation panel 13 or the administrator terminal 4. The basic information is the information including the usage, security intensity, disposed environment of the MFP, the use basic function of the MFP to be used, and the like.

The system control unit 10 of the digital multi-function peripheral 1 acquires the basic information inputted by the administrator through the operation panel 13 or the administrator terminal 4 (ACT 11). For example, in the digital multi-function peripheral 1, if it is confirmed by authentication information inputted to the operation panel 13 that the operator is the administrator, the basic information may be inputted by the operation panel 13. Besides, in the digital multi-function peripheral 1, if it is confirmed by authentication information inputted to the administrator terminal 4 that the operator is the administrator, the basic information may be inputted by the administrator terminal. For example, the administrator terminal 4 displays a web screen for inputting the basic information provided by the digital multi-function peripheral by web browser on a display. Incidentally, an example of an input process of the basic information will be described later in detail.

If acquiring the basic information inputted by the administrator through the operation panel 13 or the administrator terminal 4, the system control unit 10 of the digital multi-function peripheral 1 stores the acquired basic information as unit of the user information into the user information database (DB) 31 provided in the HDD 26 (ACT 12).

If the basic information inputted by the administrator is stored as unit of the user information, the processor 20 of the system control unit 10 creates a report (list) relating to security settings (ACT 13). The processor 20 refers to the security setting knowledge database 32 in the HDD 26, and creates the report relating to the security settings for the user information as the basic information inputted by the administrator. The report is a list showing threats to information (protected assets estimated from the basic information) handled by the digital multi-function peripheral 1 and security protection methods to those threats. An example of a creation method of the report will be described later in detail.

If creating the report relating to the security settings for the user information set by the administrator, the processor 20 of the system control unit 10 outputs the created report (ACT 14). For example, the processor 20 displays the created report on the display 14 of the operation panel 13 or the display of the administrator terminal 4 by which the administrator inputs the basic information. The created report can be outputted in plural forms. For example, the processor 20 can display the report on the display 14 of the operation panel 13, can display it on the display of the administrator terminal 4, or can print it on a sheet by the printer 12.

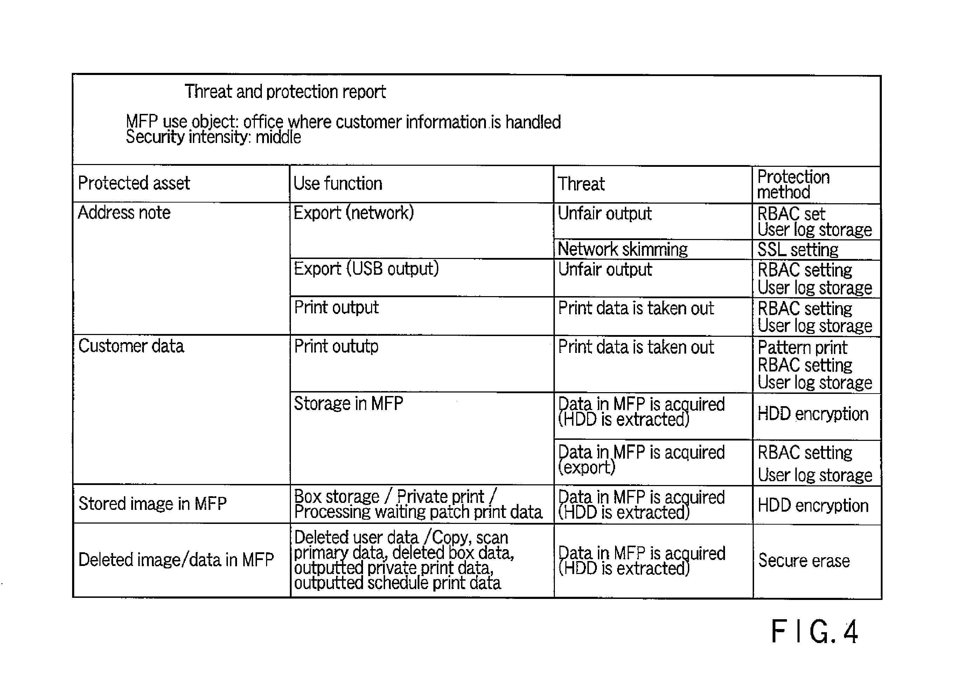

FIG. 4 is an example of the created report (list). As shown in FIG. 4, the report shows protected assets selected from the user information as the basic information, use functions of the protected assets, threats to the respective protected assets in the respective use functions, and protection methods to those threats. The example of the report shown in FIG. 4 assumes that the use object (usage) of the MFP is "office where customer information is handled", and the security intensity is "middle".

After the report is created, the processor 20 urges selection (setting) of the protection methods to the respective threats to the respective protected assets presented in the report (ACT 15). The processor 20 stores, as the setting information, the protection method selected (set) by the administrator into the HDD 26 (ACT 16). For example, the processor 20 displays the selection (setting) screen for the respective protection methods shown in the report on the display 14 of the operation panel 13 or the display of the administrator terminal 4 by which the administrator inputs the basic information.

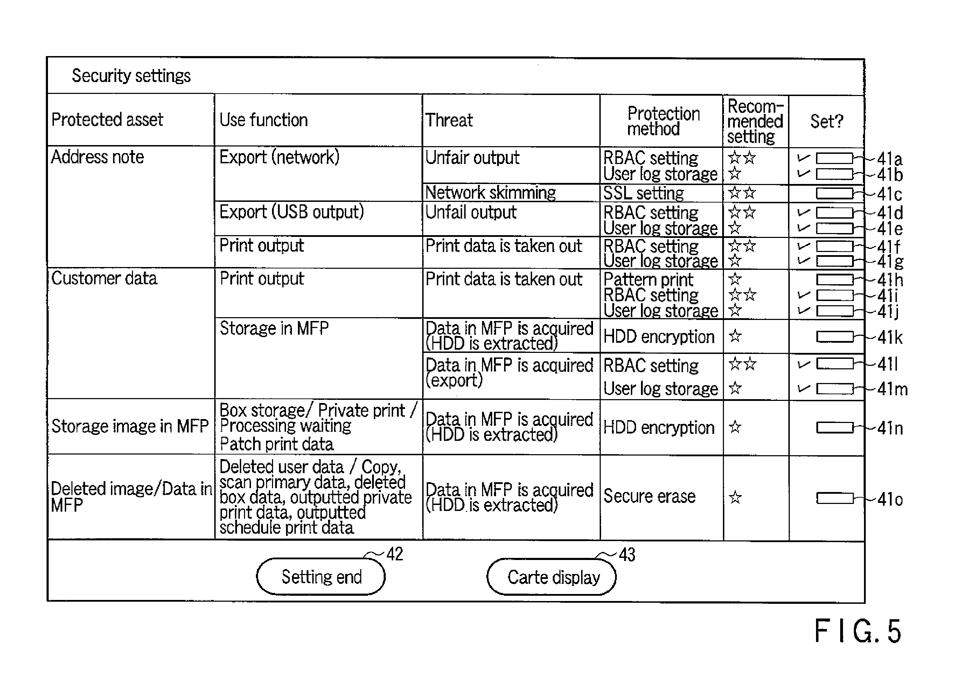

For example, FIG. 5 is a display example of the selection screen of the protection methods relating to the security.

The selection screen shown in FIG. 5 displays recommended settings (recommended degrees), setting states and setting keys 41 (41a, 41b, ) which are correlated with the protection methods to the protected assets and user functions. Besides, the selection screen shown in FIG. 5 displays a setting end key 42 to instruct the end of setting and a carte display key 43 to instruct the display of a carte based on the setting content.

If the administrator indicates a setting key 41 on the selection screen shown in FIG. 5, the processor 20 sets a protection method corresponding to the indicated setting key 41. For example, the processor 20 displays a setting screen relating to the protection method corresponding to the indicated setting key 41. In this case, the processor 20 sets the protection method in accordance with the indication of the administrator on the setting screen.

If a certain protection method is set, on the selection screen as shown in FIG. 5, the processor 20 displays a mark indicating completion of setting, which is correlated with the set protection method. Besides, if one protection method is set by a setting key 41, the processor 20 displays a mark indicating completion of setting for the same protection method corresponding to another threat. For example, in the example shown in FIG. 5, if the setting of access control of a user RBAC (Role Base Access Control) is set by the setting key 41a, the processor 20 displays marks indicating the completion of setting for all RBAC settings as protection methods to plural threats.

If the selection of the protection methods to the respective threats is ended, the administrator instructs the end of the setting or the display of the carte by one of the setting end key 42 and the carte display key 43. If the administrator instructs the carte display (ACT 17, YES), the processor 20 diagnoses the state of the security settings based on the present setting content including the set protection, and creates a carte (list) as the diagnosis result (ACT 18). The carte shows the security state by the protection method selected by the administrator. For example, the carte shows the security intensity of each protected asset or the security intensity of each security function as well as the protection method indicated by the administrator. Besides, the security intensity of each protected asset and the security intensity of each security function may be shown in contrast with recommended values.

If the security intensity of each protected asset is shown in the carte, the processor 20 extracts the security intensity of each protected asset based on the present security settings. The processor 20 creates a carte in which the extracted security intensity is correlated with the recommended value and is shown. Besides, in the carte, if the security intensity of each security function is shown, the processor 20 extracts the security intensity of each security function based on the present security settings. The processor 20 creates the carte in which the security intensity of each security function is correlated with the recommended value and is shown.

If the carte is created, the processor 20 displays the carte on the display 14 of the operation panel 13 operated by the administrator or the display of the administrator terminal 4 (ACT 19). The created carte can be outputted in plural forms. For example, the processor 20 may not only display the carte on the display 14 of the operation panel 13 or the display of the administrator terminal 4 but also print the carte on a sheet by the printer 12. Here, it is assumed that the carte is displayed on the display 14 of the operation panel 13 operated by the administrator or the display of the administrator terminal 4.

Besides, if the carte is created, the processor 20 determines whether there is a function (setting item) which becomes unnecessary in the present setting content (ACT 20). If there is a function which becomes unnecessary (ACT 20, YES), the processor 20 requires consent to the setting to unable the use of the function which becomes unnecessary (ACT 21). For example, the processor 20 displays a guide to request consent to auto setting to unable the use of the function which becomes unnecessary. If the administrator consents to the setting to unable the use of the function which becomes unnecessary (ACT 21, YES), the processor 20 sets the function which becomes unnecessary to be unusable (ACT 22).

For example, if the administrator sets reception of electronic mail to be impossible, the port of the network relating to the reception of the electronic mail, such as POP, becomes unnecessary. If there is a port of a network which becomes unnecessary by the setting content indicated by the administrator, if consent from the administrator is obtained, the processor 20 of the system control unit 10 disconnects the port of the network which becomes unnecessary. In this digital multi-function peripheral 1, the function which becomes unnecessary according to the basic information specified by the administrator can be guided to the administrator, and can be automatically set to be unusable after confirmation by the administrator.

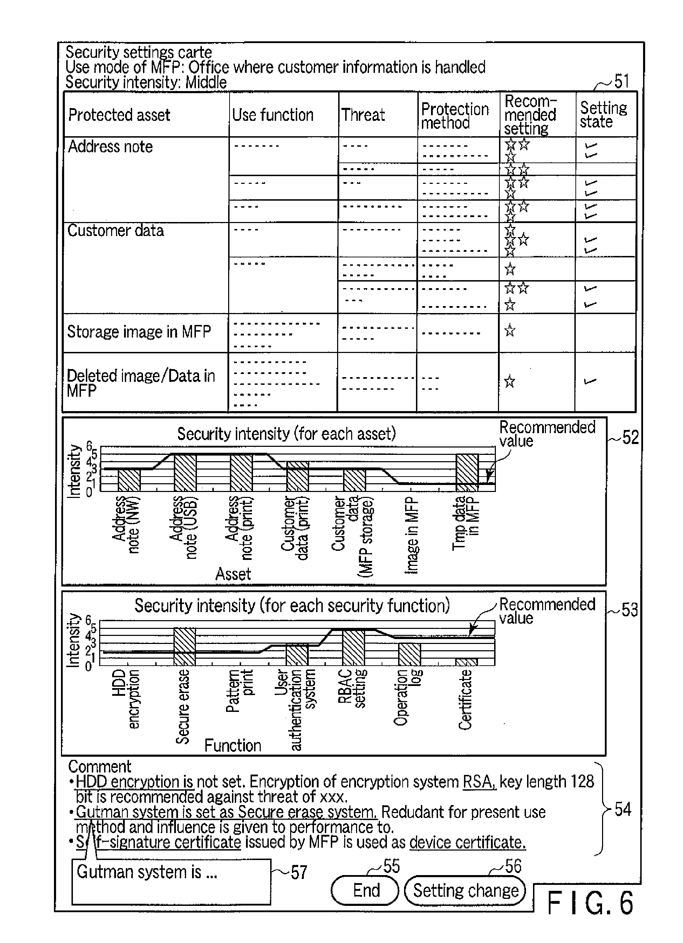

FIG. 6 shows a display example of the carte relating to security settings.

In the display example of the carte shown in FIG. 6, the processor 20 displays a table 51 showing the setting states of respective protections in the report as shown in FIG. 4, a graph 52 showing the security intensity of each protected asset, a graph 53 showing the security intensity of each security function, and a comment 54 relating to the present security settings. Besides, in the display example of the carte shown in FIG. 6, the processor 20 displays an end key 55 as an icon to instruct the end of setting and a setting change key 56 as an icon to instruct the change of setting.

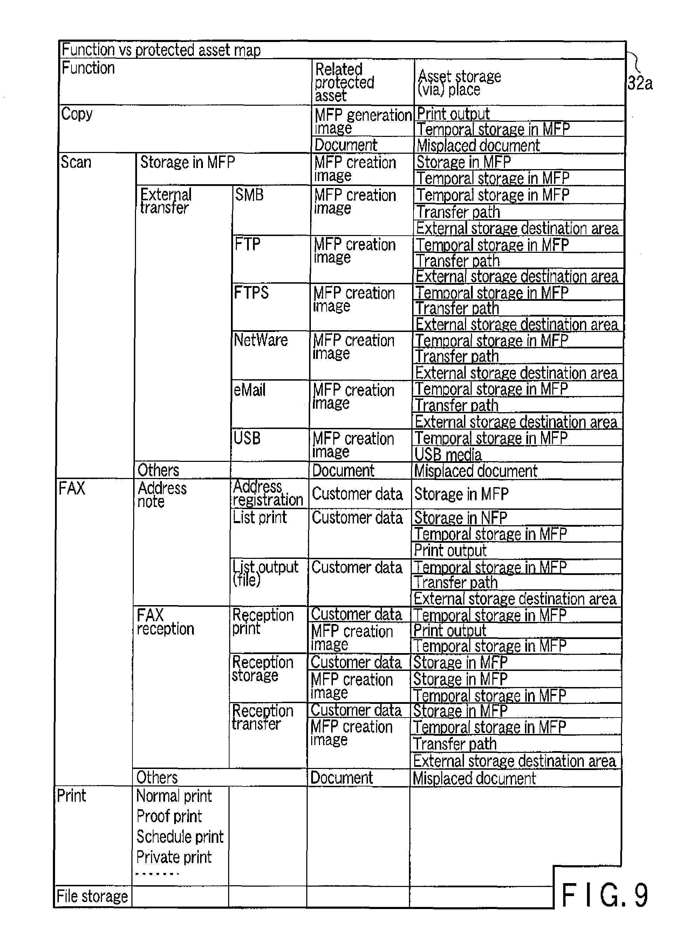

Besides, in the graph 52 showing the security intensity of each protected asset, the processor 20 shows the security intensity of each protected asset according to the present settings and the recommended value in contrast with each other. Besides, in the graph 53 showing the security intensity of each security function, the processor 20 shows the security intensity of each security function according to the present settings and the recommended value in contrast with each other. The processor 20 determines the recommended value of the security intensity of each protected asset and the recommended value of the security intensity of each security function based on the information stored in the security setting knowledge database 32. Incidentally, a structural example of the security setting knowledge database 32 will be described later with reference to FIGS. 9 to 11.

Further, in the display example of the carte shown in FIG. 6, the processor 20 displays a term in a selectable state, the explanation of which is displayed according to the instruction of the operator. For example, in the display example shown in FIG. 6, the processor 20 displays, in a selectable state, display portions of terms such as "HDD encryption", "RSA", "secure erase system", "Gutman system", "device certificate" and "self-signature certificate". If the operator selects the display portion of the term (ACT 23, YES), the processor 20 searches the term database 3 for the explanation of the selected term (ACT 24). The processor 20 displays the explanation (meaning) of the selected term based on the search result (ACT 25).

For example, as shown in FIG. 6, the processor 20 correlates a term explanation column 57 including the explanation (meaning) of a term with a display portion of the term selected by the administrator, and superimposes and displays it on the display screen of the carte. Besides, the processor 20 may display a setting example relating to a term.

Incidentally, the processor 20 may search for the explanation (meaning) of the term selected by the administrator from the server 2 on the LAN. Besides, even if the security setting is performed, in a state where connection with an external network is secured, the process 20 may search for the explanation (meaning) of the term through the external network.

If the setting change key 56 is indicated in the state where the carte is displayed (ACT 26, YES), the processor 20 returns to ACT 16, and stores (updates) the setting information inputted by the administrator into the HDD 26. After the setting information is stored, the processor 20 can repeatedly execute the process subsequent to ACT 16. If the end key 55 is indicated (ACT 26, NO), the processor 20 ends the security setting.

As stated above, if the basic information, such as the usage, required security intensity, disposed environment of the MFP and basic function to be used, is set, the digital multi-function peripheral presents the protected assets estimated from the basic information set by the administrator, the threats estimated from the protected assets, and the security protection methods (protection plans) to the estimated threats. By this, the administrator can easily know the threats estimated from the set basic information and the protection plans to the threats, and can indicate appropriate security setting content.

Next, an example of an input process of the basic information will be described.

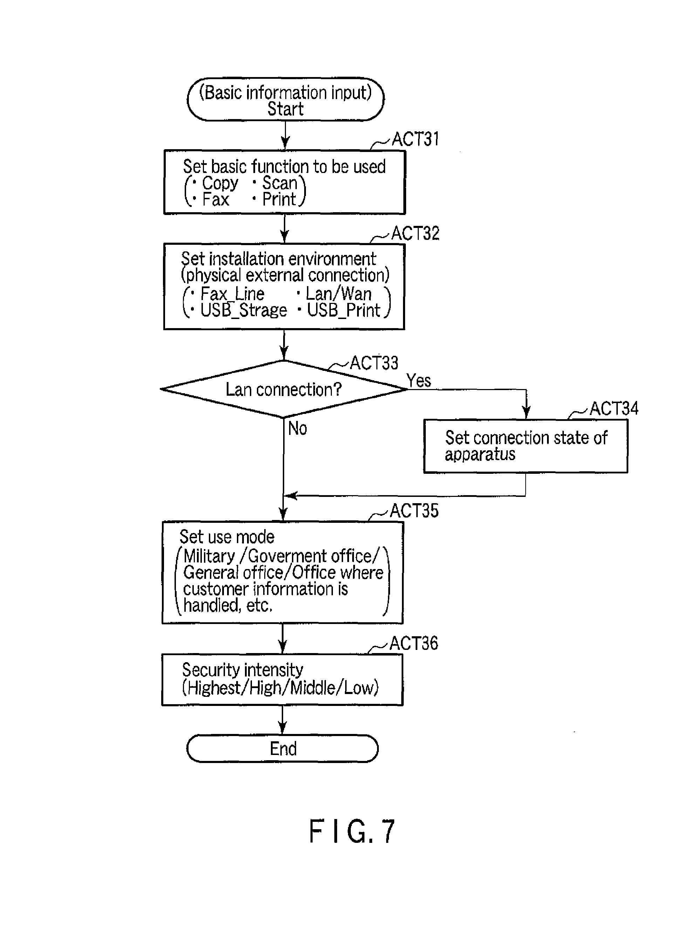

FIG. 7 is a flowchart for explaining a flow of the input process of the basic information.

In the example shown in FIG. 7, the administrator inputs, as the basic information, the information indicating the basic functions of the MFP to be used. The digital multi-function peripheral 1 has, as the basic functions, for example, copy, scan, print, facsimile, file storage, mail transmission and reception, and the like. The administrator specifies whether these basic functions are used or not. The system control unit 10 of the digital multi-function peripheral 1 sets (stores) the information specified by the administrator and indicating the basic functions to be used as unit of the user information (basic information) (ACT 31).

The administrator inputs information indicating the disposed environment as the basic information. The disposed environment of the digital multi-function peripheral 1 is an external apparatus which allows the digital multi-function peripheral 1 to be connected or an interface which enables connection of the external apparatus. For example, the information indicating the disposed environment includes information indicating the presence or absence of FAX connection, the presence or absence of LAN or WAN, connection enabled/disabled state of the external storage device (memory device, memory card, etc.), and print enabled/disabled state from the external storage device. The administrator inputs the information indicating the disposed environment. The system control unit 10 of the digital multi-function peripheral 1 sets (stores), as unit of the user information, the information inputted by the administrator and indicating the disposed environment (ACT 32).

Further, if the presence of the LAN connection is set (ACT 33, YES), the system control unit 10 sets also information relating to an equipment connected to the LAN as information indicating the disposed environment (ACT 34). That is, if the digital multi-function peripheral 1 is connected to the LAN, the administrator inputs, as the information indicating the disposed environment, the presence or absence of firewall between the LAN and the external network, the presence or absence of an authentication server, security setting state of a file server, and security setting state of a mail server. The system control unit 10 of the digital multi-function peripheral 1 sets (stores), as unit of the user information, the information inputted by the administrator and relating to the equipment connected to the LAN (ACT 34).

The administrator inputs the information indicating the usage of the digital multi-function peripheral 1 as the basic information. As the usage of the digital multi-function peripheral 1, for example, military use, government office, general office, office where customer information is handled, standalone and the like can be specified. It is conceivable that the administrator selects the use form from the previously prepared categories as mentioned above. However, the usage which can be set as the basic information is not limited to the foregoing example. The usage of the digital multi-function peripheral 1 is varied. The usage has only to be correlated with a database described later. The administrator inputs the information indicating the usage of the digital multi-function peripheral 1. The system control unit 10 of the digital multi-function peripheral 1 sets (stores), as unit of the user information, the information (basic information) inputted by the administrator and indicating the usage (ACT 35).

The administrator inputs, as the basic information, the information indicating the security intensity required in the digital multi-function peripheral 1. The digital multi-function peripheral 1 may selectively sets the level of the intensity from "highest", "high", "middle" and "low". Besides, the security intensity may be set more finely or may be set by numerical values. The administrator inputs the information indicating the security intensity required in the digital multi-function peripheral 1. The system control unit 10 of the digital multi-function peripheral 1 sets (stores), as unit of the user information, the information inputted by the administrator and indicating the usage (ACT 36).

By the input process of the basic information as stated above, the digital multi-function peripheral 1 can store various basic information inputted by the administrator as unit of the user information.

Next, an example of a process of creating the report (list of information relating to security) from the basic information inputted by the administrator will be described.

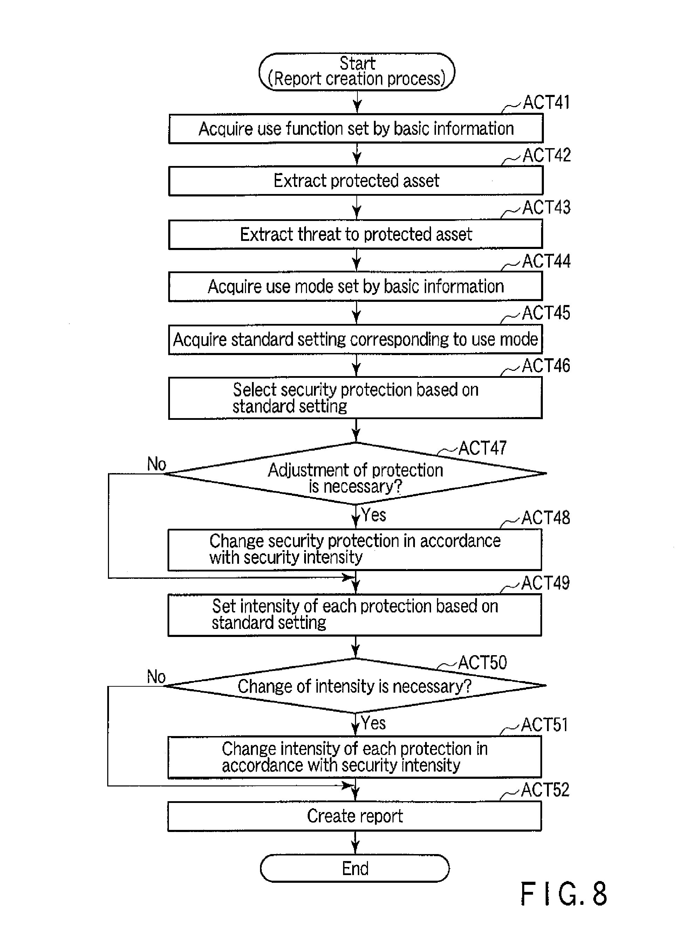

FIG. 8 is a flowchart for explaining an example of the report creation process.

FIG. 9 to FIG. 12 are views showing an example of the security setting knowledge database (DB) 32.

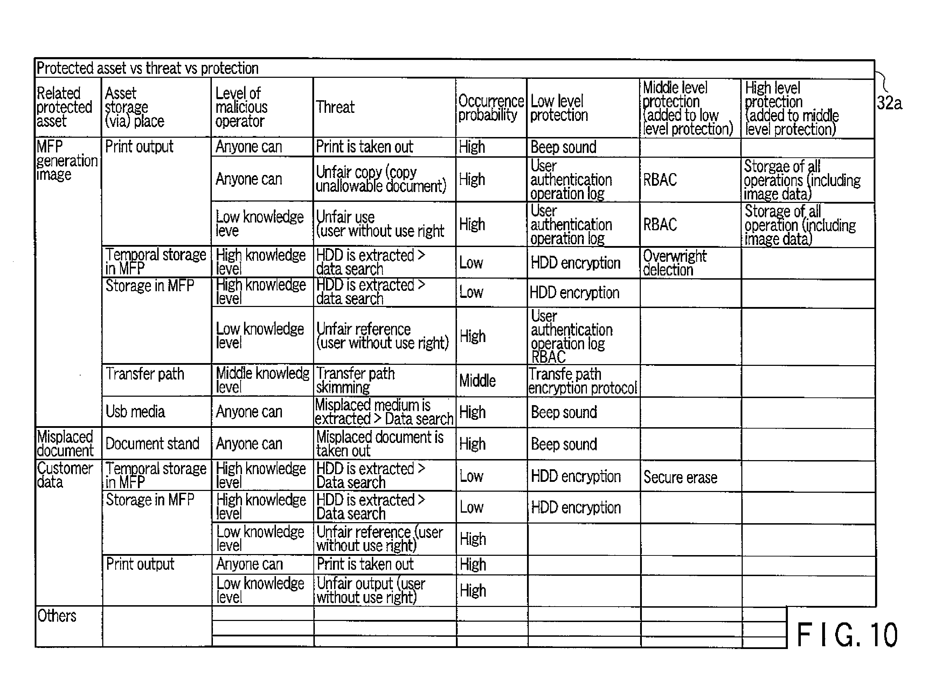

FIG. 9 shows an example of the database 32a showing a correspondence relation between the basic functions of the MFP and the protected assets in the security setting knowledge DB 32. FIG. 10 shows an example of the database 32b showing a correspondence relation between protected assets, threats and protections in the security setting knowledge DB 32. In the example shown in FIG. 10, a protected asset, asset storage (via) place, level of a malicious operator, threat, occurrence probability, low level protection, middle level protection and high level protection are correlated with one another and are stored.

For example, the "low level protection" in the example shown in FIG. 10 indicates the security protection at the low level of security intensity for the corresponding protected asset and threat. The "middle level protection" in the example shown in FIG. 10 indicates the security protection at the middle level of security intensity for the corresponding protected asset and threat. The "high level protection" in the example shown in FIG. 10 indicates the security protection at the high level of security intensity for the corresponding protected asset and threat. Incidentally, the "middle level protection" in the example shown in FIG. 10 is executed in addition to the "low level protection", and the "high level protection" in the example shown in FIG. 10 is executed in addition to the "middle level protection".

For example, in the example shown in FIG. 10, if the level of the malicious operator is low or less, and if the security intensity is at the low level, the security protection for the print output of image data or the storage thereof in the MFP includes the execution of "user authentication" and the storage of "operation log". In the example shown in FIG. 10, if the level of the malicious operator is low or less, and if the security intensity is at the middle level, the security protection for the print output of image data includes the setting of "RBAC" in addition to the protection at the low level. In the example shown in FIG. 10, if the level of the malicious operator is low or less, and if the security intensity is at the high level, the security protection for the print output of image data includes the storage of "all operation content including image data" in addition to the protection at the middle level.

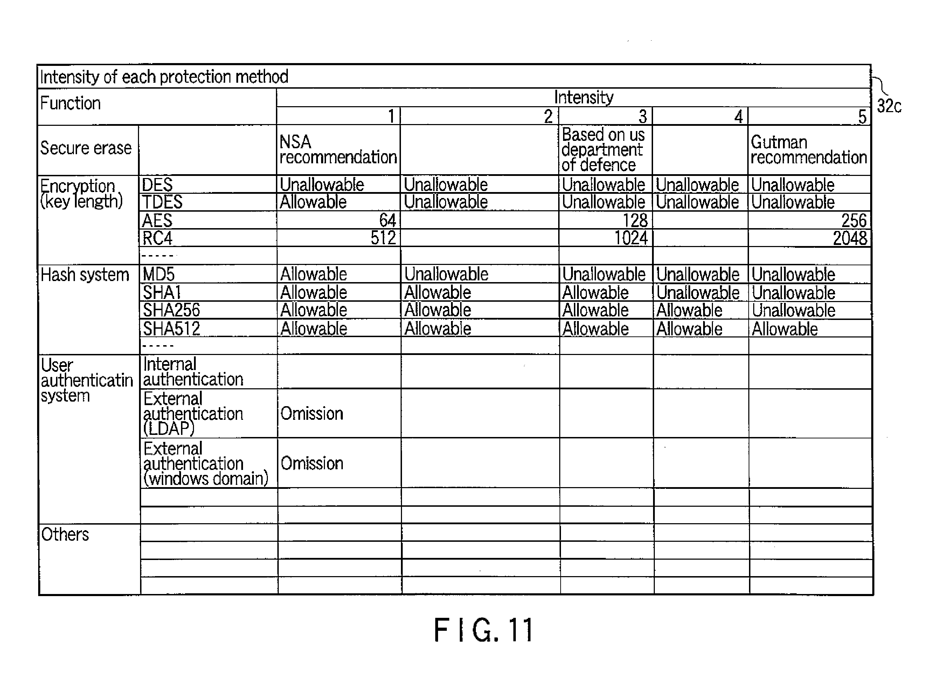

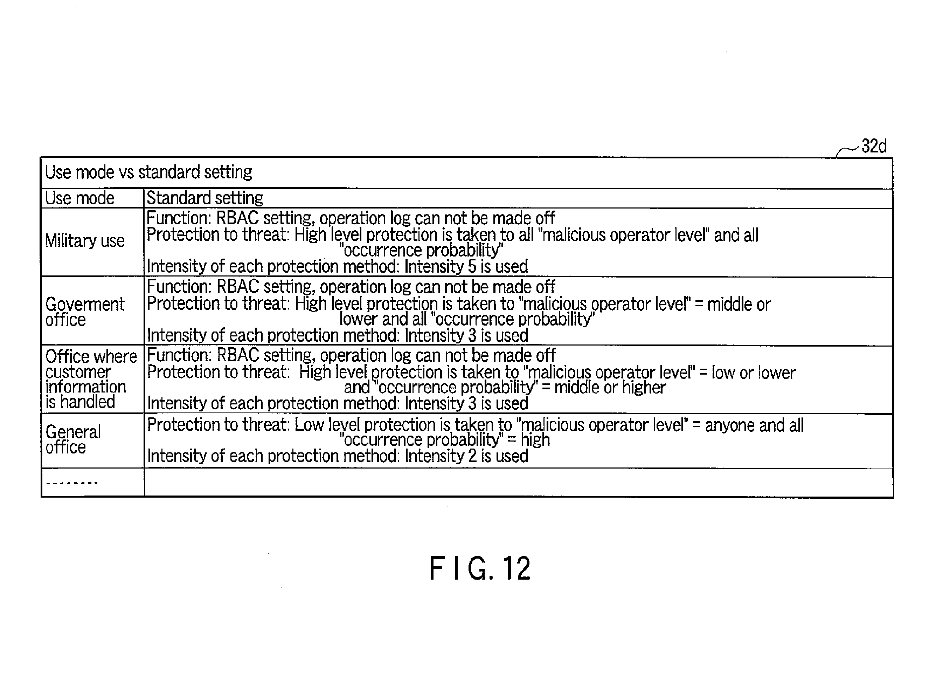

FIG. 11 shows an example of a database 32c showing a relation between the intensity and the respective protections in the security setting knowledge DB 32. FIG. 12 shows an example of a database 32d of standard setting for usages in the security setting knowledge DB 32. In the example shown in FIG. 12, the standard security setting content is correlated with the usage such as "military use", "government office", "office where customer information is handled" or "general office" and is stored. For example, in the example shown in FIG. 12, as the standard security setting corresponding to the "office where customer information is handled", it is stored that RBAC is set, and the storage of an operation log is set not to be turned off.

That is, if the basic information inputted by the administrator is stored as the user information, the processor 20 reads the information indicating the basic function of the MFP to be used from the basic information (user information stored in the HDD) set by the administrator (ACT 41). If the information indicating the basic function of the MFP to be used is read, the processor 20 refers to the database 32a, and extracts the protected assets (information to be protected, etc.) for the basic function of the MFP to be used and the use functions (storage place or transfer path of the protected asset) of the protected asset (ACT 42). If extracting the protected assets and the use functions of the protected assets are extracted, the processor 20 refers to the database 32b, and extracts the threat for each of the use functions of the protected assets (ACT 43).

Besides, if the basic information inputted by the administrator is stored as the user information, the processor 20 of the system control unit 10 reads information indicating the usage of the digital multi-function peripheral 1 from the stored user information (ACT 44). If the information indicating the use form of the MFP is read, the processor 20 refers to the database 32d, and reads the standard setting for the usage set by the administrator (ACT 45). If reading the standard setting for the usage, the processor 20 refers to the database 32b, and selects, based on the read standard setting, the necessary security protection for the threat against each of the use functions of the protected assets (ACT 46).

Besides, the processor 20 determines whether it is necessary to adjust (add or delete) protections to be selected according to the security intensity set as the basic information by the administrator with respect to the protection selected from the standard setting (ACT 47). If it is determined that the protections selected according to the security intensity set by the administrator are adjusted (ACT 47, YES), the processor 20 selects the required protection based on the standard setting for the usage and the setting value of the security intensity (ACT 48). For example, if the administrator sets the security intensity higher than the security intensity of the standard setting for the usage, the processor 20 selects the security protection of the level set by the administrator and adds it to the protection for the standard setting of the usage.

If selecting the protection on the security, the processor 20 sets, as the intensity for each protection, the standard value of intensity of each protection, which is stored in the database 32c, for each of the extracted protections (ACT 49). Besides, the processor 20 determines whether it is necessary to change the intensity for each protection, which is set as the standard setting, in accordance with the security intensity set as the basic information by the administrator (ACT 50). If it is determined that the intensity of each protection is changed in accordance with the security intensity set by the administrator (ACT 50, YES), the processor 20 changes the intensity of each protection, which is set as the standard setting, based on the setting value of the security intensity (ACT 51). For example, if the security intensity higher than the standard setting is set, the processor 20 makes the intensity of each protection higher than the standard value.

The processor 20 creates a report (list) in which the information as stated above is summarized (ACT 52). The report (list) is summarized in, for example, the form as shown in FIG. 4. The report as shown in FIG. 4 shows the protected assets, the use functions of the protected assets, the threats to the respective use functions of the protected assets, and the protection methods (protection plans) to the respective threats with respect to the basic information (user information) set by the administrator.

As stated above, the digital multi-function peripheral 1 not only stores the basic information specified by the administrator, but also can provide the report showing the protected assets based on the basic information specified by the administrator, the threats to the respective use functions of the protected assets, and the protection plans to the respective threats. The administrator can easily confirm the content of the normally adequate security setting by the report.

Next, a process if the administrator changes the setting information will be described.

The administrator can appropriately change the setting information relating to the security of the digital multi-function peripheral 1. The digital multi-function peripheral 1 proposes the setting content to be changed together with the change of the setting information by the administrator. For example, if the administrator changes the basic information, the digital multi-function peripheral 1 proposes the setting item, which is to be again set in accordance with the change, to the administrator. Besides, if the administrator changes the setting content (processing content) of each security setting item, the digital multi-function peripheral 1 determines the appropriateness (excess or deficiency) of the change setting content, and provides the administrator with the determination result.

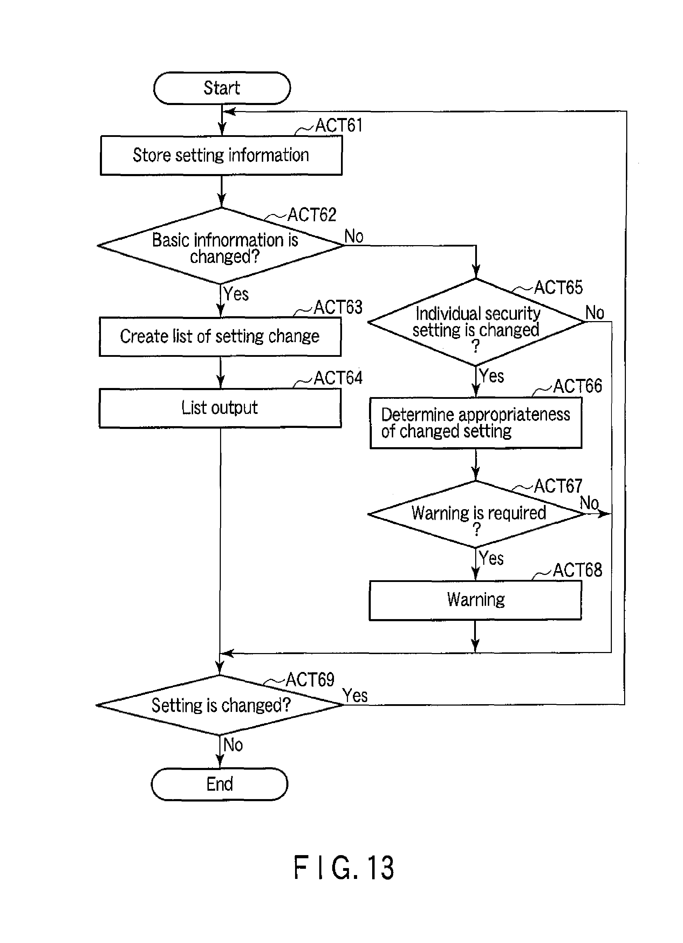

FIG. 13 is a flowchart for explaining a flow of a process accompanying the change of the setting relating to security.

If the administrator changes the setting content of the setting item relating to the security, the system control unit 10 of the digital multi-function peripheral 1 stores (updates) the changed setting content (ACT 61). If the setting information is updated, the processor 20 of the system control unit 10 determines whether the changed setting content is the basic information (usage, security intensity, disposed environment of the MFP, and basic function of the MFP to be used) or not (ACT 62).

If it is determined that the basic information is updated (ACT 62, YES), the processor 20 lists the setting item requiring the setting change in accordance with the change of the basic information (ACT 63). The processor 20 outputs the information in which the setting item requiring the setting change is listed (ACT 64).

For example, the processor 20 displays the guide of the setting change indicating the setting item, which is determined that the setting change is necessary, on the display 14 of the operation panel 13 or the display of the administrator terminal 4 in the format similar to the report shown in FIG. 4. Besides, the processor 20 may display the list of items requiring the setting change in accordance with the change of the basic information in a carte as shown in FIG. 6. For example, the processor 20 may emphasize and display, in the carte, the item requiring the setting change.

Besides, if the changed setting information is not the basic information (ACT 62, NO), the processor 20 of the system control unit 10 determines whether the changed setting content is individual security setting or not (ACT 65). If it is determined that the changed setting content is the individual security setting (ACT 65, YES), the processor 20 of the system control unit 10 determines the appropriateness of the changed security setting (ACT 66). If the determination result of the appropriateness of the security setting is the setting content to be warned (ACT 67, YES), the processor 20 warns the administrator of the setting content (ACT 68).

For example, the processor 20 determines the recommended value of the security intensity to the changed setting content based on the information stored in the security setting knowledge database 32. The processor 20 compares the determined recommended value of the security intensity with the security intensity according to the setting after the change, and may determine the appropriateness of the setting after the change.

Besides, the processor 20 may determine the appropriateness of the setting content by the usage and the load of process. For example, as the setting of secure erase for a temporal file, if the administrator changes it to the setting in which the number of times of overwrite is large more than necessary although the general office is used, the processor warns the estimated performance down. As stated above, if it is determined that the load of the process for the security protection is large in addition to the usage, the processor 20 may warn that the setting is the redundant setting.

Besides, as the setting of access control of the user (RBAC), if it is set that all users can print the address note although Export of the address note through the network is allowed to only limited users, the processor 20 warns that the setting is insufficient. As stated above, if there is an item in which the setting is to be changed, the processor 20 may warn the setting is insufficient.

Besides, in the carte as shown in FIG. 6, the processor 20 may perform warning display of the inappropriate setting item. For example, in the carte as shown in FIG. 6, the processor 20 emphasizes and displays the inappropriate setting item and may display the warning.

If the administrator inputs the setting change in accordance with the list of the setting item requiring the change or the warning to the inappropriate setting (ACT 69, YES), the processor 20 returns to ACT 61, and repeatedly executes the foregoing process.

As stated above, if the basic information, such as the usage, required security intensity, disposed environment of the MFP and basic function to be used, is changed, the digital multi-function peripheral presents the list of items to be changed in accordance with the change of the basic information. Besides, if the content of individual security setting is changed, the digital multi-function peripheral determines the appropriateness of the changed setting content, and if the changed content is inappropriate, the digital multi-function peripheral warns. The digital multi-function peripheral 1 can urge the change of setting content in accordance with the change of the setting information relating to the security. Besides, by the information provided by the digital multi-function peripheral, the administrator can easily grasp all portions which are to be subjected to the setting change.

Next, a process of a case where the security setting knowledge DB 32 is updated will be described.

The digital multi-function peripheral 1 stores information, such as respective protected assets, threats to the protected assets and protection methods (protection plans) to the threats, into the security setting knowledge DB 32. There is a possibility that the information to be stored in the security setting knowledge DB 32 is always updated. In the digital multi-function peripheral 1, it is always necessary to cause the estimated threat and protection plan to become newest information according to the industry trends or the like.

For example, if new functions provided in the digital multi-function peripheral 1 are increased, the processor 20 acquires update information indicating the addition of the new function. The processor 20 adds a protected asset relating to the new function into the database 32a indicating the relation between the functions and the protected assets, and updates the security setting knowledge DB 32.

Besides, if an easily acquired new cracking tool appears, there is a possibility that a threat which could not be used unless the level of a malicious operator is a certain level or higher (for example, high knowledge level) can be used by anyone. If the easily acquired new cracking tool appears, the processor 20 acquires update information indicating information to be updated. In the database 32b indicating the relation between the protected assets, threats and protections, the processor 20 updates the level of the malicious operator to the protected asset exposed to the threat by the cracking tool and the occurrence probability.

Besides, if an encryption system or hash intensity, which is regarded as being safe, can not keep desired safety, the processor 20 acquires, as update information, information indicating intensity of each new protection or information indicating new key length. If acquiring the update information of the intensity of each protection, the processor 20 updates the database 32c indicating the intensity of each protection.

Besides, the digital multi-function peripheral 1 updates the security setting knowledge DB 32 by update information acquired through the network or update information directly acquired from a connected external storage device. If the information stored in the security setting knowledge DB 32 is updated, the security setting is also often to be updated. If the security setting knowledge DB 32 is updated, the digital multi-function peripheral 1 presents the setting to be updated in the security setting to the administrator.

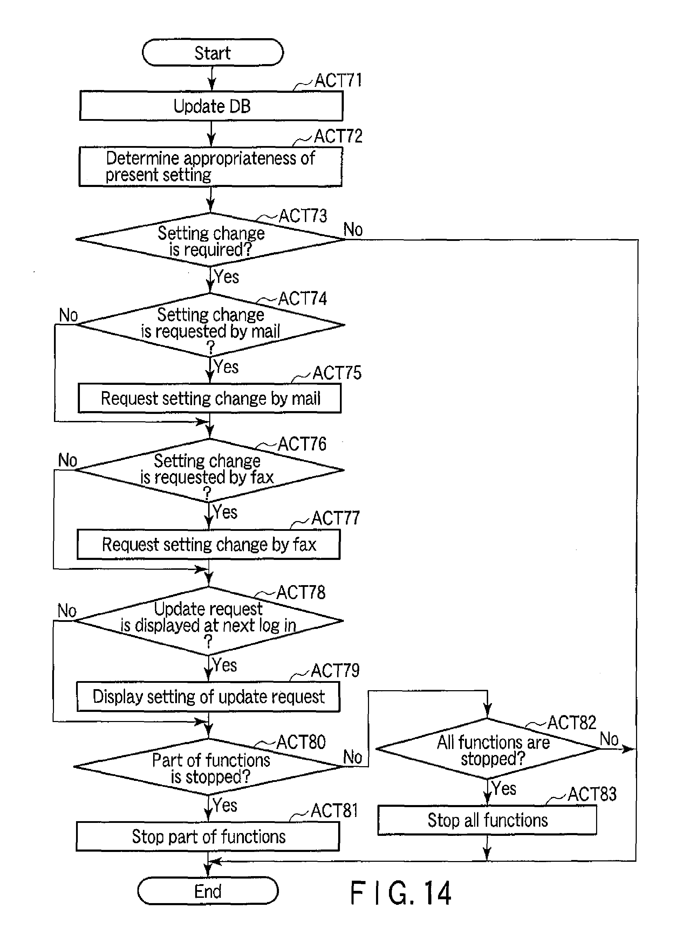

A process of a case where the security setting knowledge DB 32 is updated will be described wither reference to FIG. 14.

The system control unit 10 of the digital multi-function peripheral 1 updates the security setting knowledge DB 32 by the update information acquired through the network or directly from the connected external storage device (ACT 71). If the security setting knowledge DB 32 is updated, the processor 20 of the system control unit 10 determines whether the present security setting is appropriate for the information stored in the security setting knowledge DB 32 after the update (ACT 72).

For example, the processor 20 compares the present basic information, such as the present usage, function to be used and security intensity, with the security setting knowledge DB 32 after the update, and checks whether the present security settings (security protection, intensity of each protection method, etc.) is excessive or insufficient.

The processor 20 determines, based on the determination result of ACT 72, whether there is a setting item for which the administrator is urged to change the setting (ACT 73). If the setting item for which the administrator is urged to change the setting is found (ACT 73, YES), the processor 20 performs notification to the administrator or function restriction of the digital multi-function peripheral in accordance with specified setting.

For example, if the setting is such that a request for setting change accompanying the update of the security setting knowledge DB 32 is notified by mail (ACT 74, YES), the processor 20 creates a mail (mail to request the setting change) to notify the setting item for which the administrator is urged to change the setting. The processor 20 transmits the created mail requesting the setting change to the administrator (ACT 75). If the setting is such that the request for the setting change is notified by mail, the mail address of the administrator is previously stored in the storage unit such as the HDD 26. Besides, with respect to the mail address of the administrator, reference may be made to the address data stored in the server 2 or the like.

Besides, if the setting is such that the request for the setting change accompanying the update of the security setting knowledge DB 32 is transmitted by FAX (ACT 76, YES), the processor 20 creates image data (FAX data requesting the setting change) of a text to notify a setting item for which the administrator is urged to change the setting. The processor 20 faxes the created FAX data requesting the setting change to the administrator (ACT 77). If the setting is such that the request for the setting change is transmitted by FAX, the FAX number of the administrator is previously stored in the storage unit such as the HDD 26. Besides, with respect to the FAX number of the administrator, reference may be made to the address data stored in the server 2 or the like.

Besides, if the setting item for which the administrator is urged to change the setting is found, the digital multi-function peripheral 1 may display a security setting screen or a guide screen (update request screen) to request the setting update to the administrator who next logs in. If the setting is such that the security setting screen or the update request screen is displayed according to the next log-in of the administrator (ACT 78, YES), the processor 20 creates the security setting screen (update request screen) including the setting item in which the setting change is to be performed, and displays the created screen if the administrator next logs in (ACT 79).

Besides, if the setting item for which the administrator is urged to change the setting is found, the digital multi-function peripheral 1 may stop to use part of functions until the setting change is performed. That is, if the security intensity of a specified value or higher is not ensured for the setting item for which the setting change is urged, the digital multi-function peripheral 1 can set so that part of the functions relating to the setting item is brought into the use stop state.

If the setting item for which the administrator is urged to change the setting is found, the processor 20 determines whether it is necessary to stop part of the functions relating to the setting item (ACT 80). In this determination, if determining that it is necessary to stop the function relating to the setting item in which the setting change is to be performed (ACT 80, YES), the processor 20 stops the function relating to the setting item in which the setting change is to be performed (ACT 81).

Besides, if the setting item for which the administrator is urged to change the setting is found, the digital multi-function peripheral 1 may stop the use of all functions except the setting change until the setting change is performed. That is, in the state where the security intensity of a specified value or higher is not ensured, the digital multi-function peripheral 1 can set so that all functions except the setting change is stopped. Besides, if the setting item for which the administrator is urged to change the setting is found, if the setting item for which the setting change is to be urged is the previously set setting item (for example, important setting item on security), the digital multi-function peripheral 1 may stop all functions except the setting change.

If the setting item for which the administrator is urged to change the setting is found, the processor 20 determines whether it is necessary to stop all functions of the digital multi-function peripheral except the setting change (ACT 82). By this determination, if determining that it is necessary to stop all functions (ACT 82, YES), the processor 20 stops all functions of the digital multi-function peripheral 1 until the setting change is performed (ACT 83) .

As stated above, the digital multi-function peripheral has the function to update the information relating to the security, such as protected assets, threats to the protected assets and protection methods, through the network or by using the external storage device or the like. The digital multi-function peripheral 1 always places the information relating to the security into the newest state by the update function. If the information relating to the security is updated, the digital multi-function peripheral checks whether it is necessary to change the security setting. If it is necessary to change the security setting, the digital multi-function peripheral urges the change of the security setting by mail or FAX, or stops the use of part of or all of functions until the setting change is completed.

According to the digital multi-function peripheral as described above, the safe security setting can always be kept, and the protection of the assets (information) according the newest trend (security trend) relating to the security can be performed.

While certain embodiments have been described, these embodiments have been presented by way of example only, and are not intended to limit the scope of the inventions. Indeed, the novel methods and systems described herein may be embodied in a variety of other forms; furthermore, various omissions, substitutions and changes in the form of the methods and systems described herein may be made without departing from the spirit of the inventions. The accompanying claims and their equivalents are intended to cover such forms or modifications as would fall within the scope and spirit of the inventions.

## Claims

1. An image forming apparatus **characterized by** comprising:
a database (32) configured to stores assets to be protected, threats to the protected assets and security protection methods to the threats;
an acquisition unit (ACT11) configured to acquire basic information inputted by an administrator;
a list creation unit (ACT13) configured to list a threat to a protected asset estimated from the basic information acquired by the acquisition unit and a security protection method by referring to the database; and
a list output unit (ACT14) configured to output information listed by the list creation unit.

2. The apparatus of claim 1, **characterized in that**
the database stores information relating to security intensity, and the apparatus further comprises:
a security diagnosis unit (ACT18) that refers to the database and diagnoses a setting state of security realized by setting content selected by the administrator by; and
a diagnosis result output unit (ACT19) configured to output a diagnosis result obtained by the security diagnosis unit.

3. The apparatus of claim 2, **characterized in that**
the security diagnosis unit diagnoses the security intensity of each protected asset realized by the setting content selected by the administrator, and
the diagnosis result output unit outputs the diagnosis result including information indicating the security intensity of each protected asset realized by the setting content selected by the administrator.

4. The apparatus of claim 3, **characterized in that**
the security diagnosis unit determines a recommended value of the security intensity of each protected asset in the basic information acquired by the acquisition unit, and
the diagnosis result output unit outputs the diagnosis result including information in which the security intensity of each protected asset realized by the setting content selected by the administrator is correlated with the recommended value of the security intensity of each protected asset.

5. The apparatus of claim 2, **characterized in that**
the security diagnosis unit diagnoses the security intensity of each protected asset realized by the setting content selected by the administrator, and
the diagnosis result output unit outputs the diagnosis result including information indicating the security intensity of each security protection realized by the setting content selected by the administrator.

6. The apparatus of claim 5, **characterized in that**
the security diagnosis unit determines a recommended value of the security intensity of each protected asset in the basic information acquired by the acquisition unit, and
the diagnosis result output unit outputs the diagnosis result including information in which the security intensity of each security protection realized by the setting content selected by the administrator is correlated with the recommended value of the security intensity of each security protection.

7. The apparatus of claim 2, **characterized by** further comprising
a search unit (ACT24) configured to search for, if one of information included in the diagnosis result outputted by the output unit is selected, an explanation of the selected information,
wherein the output unit outputs the explanation of the selected information searched by the search unit.

8. The apparatus of claim 1, **characterized in that**
if the administrator changes the basic information, the list creation unit lists a protected asset estimated from the basic information after the change, a threat to the protected asset and a security protection method, and
the list output unit outputs information listed by the list creation unit and corresponding to the basic information after the change.

9. The apparatus of claim 2, **characterized in that**
if the administrator individually performs setting change of a setting item relating to the security, the security diagnosis unit diagnoses appropriateness of the changed setting content, and
the determination result output unit outputs information indicating the setting content determined to be inappropriate.

10. The apparatus of claim 1, **characterized in that**
if the database is updated, the security diagnosis unit uses the database after the update and determines a setting item which is necessary to be again set from present setting content, and
the diagnosis result output unit outputs a list of the setting item determined to be necessary to be again set.

11. The apparatus of claim 10, **characterized in that**
the diagnosis result output unit mails the administrator the list of the setting item determined to be necessary to be again set.

12. The apparatus of claim 10, **characterized in that**
the diagnosis result output unit faxes the list of the setting item determined to be necessary to be again set to a FAX number of the administrator.

13. A setting method of an image forming apparatus, **characterized by** comprising:
storing (32) assets to be protected, threats to the protected assets and security protection methods to the threats into a database;
acquiring (ACT11) basic information inputted by an administrator;
listing (ACT13) a threat to a protected asset estimated from the acquired basic information and a security protection method by referring to the database; and
outputting (ACT14) listed information.

14. A security setting apparatus, **characterized by** comprising:
a storage (32) configured to store a plurality of security protections for threats to protected assets in an image forming apparatus, which are correlated with a plurality of security intensities;
an acquisition unit (ACT11) configured to acquire a security intensity selected by an administrator from the plurality of security intensities; and
a security protection setting unit (ACT16) configured to set the security protection, which is stored in the storage and corresponds to the security intensity acquired by the acquisition unit, to the image forming apparatus.

15. A security setting apparatus, **characterized by** comprising:
a storage (32) configured to store setting of a plurality of security protections for threats to protected assets in an image forming apparatus, which are correlated with a plurality of usages;
an acquisition unit (ACT11) configured to acquire a usage selected by an administrator from the plurality of usages; and
a security protection setting unit (ACT16) configured to set the security protection, which is stored in the storage and corresponds to the usage acquired by the acquisition unit, to the image forming apparatus.
